# EUROPEAN PATENT APPLICATION

(11) **EP 2 034 145 A1**
(43) Date of publication of application: **11.03.2009**
(21) Application number: 07767449.7
(22) Date of filing: 18.06.2007
(51) Int. Cl.: F01N 3/02, F01N 3/18, B01D 46/42

(54) **PM TRAPPER FAILURE DETECTION SYSTEM**

(30) Priority: 16.06.2006 JP 2006167609
(71) Applicant: Toyota Jidosha Kabushiki Kaisha, Toyota-shi, Aichi 471-8571 (JP)
(72) Inventor: SHIBATA, Daisuke, Toyota-shi Aichi 471-8571 (JP); SAWADA, Hiroshi, Toyota-shi Aichi 471-8571 (JP); FUKUOKA, Keisuke, Toyota-shi Aichi 471-8571 (JP)
(74) Representative: Intes, Didier Gérard André
(86) International application number: PCT/JP2007/062641
(87) International publication number: WO 2007/145382

(57) **Abstract**

An object of the present invention is to provide a technology that enables to detect a fault of a PM trapper with improved accuracy. According to the present invention, a plurality of temperature sensors 10 are provided in an exhaust passage 9 just downstream of a PM trapper 17 in such a way that their temperature detection elements are positioned on a plane that is perpendicular to an imaginary center axis of the exhaust passage 9. A change in the radial direction temperature distribution of the exhaust gas flowing out of the PM trapper 17 upon occurrence of a fault in the PM trapper 17 is detected from measurement values of the temperature sensors 10, and a fault of the PM trapper 17 is detected based on this radial direction temperature distribution. Since the measurement values of the temperature sensors 10 are unlikely to be affected by the amount of PM deposited on the PM trapper 17, detection of a fault of the PM trapper 17 can be achieved with improved accuracy.

## Description

### TECHNICAL FIELD

The present invention relates to a fault detection system for a PM trapper.

### BACKGROUND ART

Technologies intended for early fault detection of a PM trapper in an exhaust gas purification system equipped with a PM trapper that traps particulate matter (which will be hereinafter abbreviated as "PM") in the exhaust gas from an internal combustion engine have been proposed.

For example, Japanese Patent Application Laid-Open No. 6-323127 discloses a technology of detecting a fault in a PM trapper based on a comparison of the pressure difference across the PM trapper just after execution of regeneration process and the minimum value of the pressure difference across the PM trapper at the time when it was brand-new.

Japanese Patent Application Laid-Open No. 2004-353606 discloses a technology concerning an internal combustion engine having a first stage catalyst, a particulate filter in the downstream thereof and reducing agent supply means, in which a reducing agent is supplied to remove particulate matter trapped by said filter thereby regenerating the filter, wherein the larger the difference between the exhaust gas temperature in the downstream of the filter and the exhaust gas temperature in the upstream of the filter after a specified time has elapsed since the start of removal of particulate matter by the reducing agent supply means is, the higher the degree of deterioration of the first stage catalyst is assessed to be.

Furthermore, Japanese Patent Application Laid-Open No. 2005-201119 discloses a technology intended for appropriately diagnosing the status of clogging of an exhaust gas purification element, in which an NOx storage reduction catalyst and a DPNR catalyst are provided in series in an exhaust passage of an engine, a first temperature sensor that measures the temperature of the exhaust gas that has just passed through the NOx storage reduction catalyst and a second temperature sensor that measures the temperature of the exhaust gas that has just passed through the DPNR catalyst are provided, and clogging of the NOx storage reduction catalyst is diagnosed based on the temperature difference between the exhaust gas temperature measured by the first temperature sensor and the exhaust gas temperature measured by the second temperature sensor.

Still further, Japanese Patent Application Laid-Open No. 2004-308454 discloses a technology intended for detecting a fault in a particulate filter accurately at an early time after the occurrence of the fault by detecting the magnitude of unsteady change in the exhaust gas state quantity in the downstream of the particulate filter and comparing it with a predetermined value to detect a fault.

Still further, Japanese Patent Application Laid-Open No. 2003-155920 discloses a technology intended for making a judgment on clogging or melting damage occurring in a particulate filter with reliability by providing a pressure difference sensor that measures the pressure difference across the particulate filter provided at a point in an exhaust pipe and a judgment apparatus that makes a judgment that the particulate filter is clogged when an abnormal increase in the pressure difference is detected based on the pressure difference actually measured by the pressure difference sensor and a judgment that the particulate filter is damaged by melting when an abnormal decrease in the back pressure is detected, wherein the judgment apparatus is configured to subtract an increase in the back pressure caused by deposition of ash with time from the actually measured pressure difference in making a judgment.

### DISCLOSURE OF THE INVENTION

The fault detection for a PM trapper according to the above described prior arts is performed based on a change in the pressure difference across the PM trapper caused by a fault in the PM trapper. However, if the degree of fault in the PM trapper is small, the degree of decrease in the pressure loss in the PM trapper caused by the fault in the PM trapper is small, and therefore a change in the pressure difference across the PM trapper caused by the fault is not likely to appear noticeably. For this reason, a fault in a PM trapper could not be detected with good accuracy by the conventional fault detection methods in some cases.

Furthermore, the pressure difference across a PM trapper can change with a change in the amount of PM deposited on the PM trapper. Therefore, when the pressure difference across the PM trapper changes, it is difficult to determine whether it is caused by a fault in the PM trapper or a change in the amount of the deposited PM, and it is difficult, in some cases, to detect a fault in the PM trapper with good accuracy.

The present invention has been made in view of these problems and has an object to provide a technology that enables detection of a fault in a PM trapper with improved accuracy.

To achieve the above object, a fault detection system for a PM trapper according to the present invention is characterized by comprising a PM trapper provided in an exhaust passage of an internal combustion engine, detection means for detecting a temperature distribution in a radial direction of said exhaust passage of the exhaust gas flowing out of said PM trapper, and determination means for determining a fault of said PM trapper based on said radial direction temperature distribution detected by said detection means.

When a fault such as a crack occurs in a PM trapper, the portion in which the fault occurs is brought into a holed state, and therefore the contact area of the substrate of the PM trapper and the exhaust gas becomes smaller, which makes heat exchange between the exhaust gas and the PM trapper harder. This means that the efficiency of heat exchange between the exhaust gas and the PM trapper as the exhaust gas passes through the faulty portion of the PM trapper is lower than that as the exhaust gas passes through the non-faulty portion.

Furthermore, since pressure loss in the faulty portion is lower than that in the non-faulty portion, the exhaust gas flowing into the PM trapper selectively flows into the faulty portion. This means that the flow speed of the exhaust gas in the faulty portion becomes higher than the flow speed of the exhaust gas in the non-faulty portion. In addition, the flow rate of the exhaust gas in the faulty portion becomes higher than the flow rate of the exhaust gas in the non-faulty portion. Therefore, the heat exchange occurring between the exhaust gas passing through the faulty portion and the PM trapper is smaller than the heat exchange occurring between the exhaust gas passing through the non-faulty portion and the PM trapper.

Since the efficiency of heat exchange between the exhaust gas passing through the PM trapper and the PM trapper differs between the faulty portion and the non-faulty portion as described above, the change in the temperature of the exhaust gas passing through the faulty portion tends to be smaller than the change in the temperature of the exhaust gas passing through the non-faulty portion.

For example, during the time in which the temperature of the exhaust gas flowing into the PM trapper is higher than the temperature of the PM trapper, as is the case, for example, at the time of cold start (which time will be hereinafter referred to as "high exhaust gas temperature time"), heat transfer from the higher-temperature exhaust gas that passes through the faulty portion to the lower-temperature PM trapper is less likely to occur. In other words, the exhaust gas passing through the faulty portion is hard to be cooled. Furthermore, since a large portion of the exhaust gas flowing into the PM trapper passes through the faulty portion in which the heat exchange efficiency is low, the temperature of the exhaust gas flowing out of the faulty portion becomes higher than the temperature of the exhaust gas flowing out of the non-faulty portion.

On the other hand, during the time in which the temperature of the exhaust gas flowing into the PM trapper is lower than the temperature of the PM trapper, as is the case, for example, during the regeneration process or just after execution of the regeneration process (which time will be hereinafter referred to as "high PM trapper temperature time"), heat transfer from the higher-temperature PM trapper to the lower-temperature exhaust gas that passes through the faulty portion is less likely to occur. In other words, the exhaust gas passing through the faulty portion is hard to be heated. Furthermore, since a large portion of the exhaust gas flowing into the PM trapper passes through the faulty portion in which the heat exchange efficiency is low, the temperature of the exhaust gas flowing out of the faulty portion becomes lower than the temperature of the exhaust gas flowing out of the non-faulty portion.

As per the above, the temperature distribution of the exhaust gas flowing out of the PM trapper reflects the state of fault of the PM trapper. Therefore, it is possible to detect a fault of the PM trapper based on the temperature distribution in the radial direction of the exhaust passage of the exhaust gas flowing out of the PM trapper. Here, the "temperature distribution in the radial direction of the exhaust passage" refers to the temperature distribution of the exhaust gas on an imaginary plane that is perpendicular to an imaginary center axis of the exhaust passage. It should be noted, however, that the imaginary center axis and the imaginary plane refers to a geometrical line and plane, and they do not imply the existence of a substantial axial member or planar member provided in the exhaust passage.

The temperature distribution of the exhaust gas flowing out of the PM trapper is less likely influenced by the amount of PM deposited in the PM trapper than the pressure difference across the PM trapper is, and therefore even a fault of a small extent can be detected with good accuracy.

The exhaust gas having just flowed out of the PM trapper flows straightly. Therefore, the radial direction temperature distribution of the exhaust gas flowing out of the PM trapper can be estimated based on the exhaust gas temperatures measured by a plurality of temperature sensors arranged in the radial direction of the exhaust passage just downstream of the PM trapper.

In the present invention, a fault of the PM trapper may be detected based on the radial direction temperature distribution of the exhaust gas thus estimated.

In a normal PM trapper also, the flow speed and flow rate of the exhaust gas flowing in the vicinity of the imaginary center axis of the PM trapper tend to be maximum. The flow speed and flow rate of the exhaust gas tend to decrease and the heat release amount per unit area tends to increase as the position changes away from the imaginary center axis.

Therefore, the change in the temperature of the exhaust gas as the exhaust gas passes through the PM trapper is small in the vicinity of the imaginary center axis of the PM trapper and becomes larger as the position changes away from the center axis of the PM trapper.

For this reason, during the high exhaust gas temperature time, the temperature of the exhaust gas flowing out of the central portion of the exit side end surface of the PM trapper is the highest, and the temperature of the exhaust gas flowing out of the portion that is most distant from the central portion is the lowest.

On the other hand, during the high PM trapper temperature time, the temperature of the exhaust gas flowing out of the central portion of the exit side end surface of the PM trapper is the lowest, and the temperature of the exhaust gas flowing out of the portion that is most distant from the central portion is the highest.

In contrast, in the PM trapper in which a fault is present, the flow speed and flow rate of the exhaust gas flowing through the faulty portion is very high as described above; they are even higher than the flow speed and flow rate of the exhaust gas flowing in the vicinity of the imaginary center axis of PM trapper that is in the normal condition. Therefore, the flow speed and flow rate of the exhaust gas flowing through the non-faulty portion apart from the faulty portion are lower than the flow speed and flow rate of the exhaust gas in the portion apart from the center axis of the PM trapper in the normal condition.

Accordingly, the change in the temperature of the exhaust gas passing through the faulty portion is smaller than the change in the temperature of the exhaust gas passing in the vicinity of the imaginary center axis in the normal condition. In addition, the change in the temperature of the exhaust gas passing through the non-faulty portion apart from the faulty portion is larger than the change in the temperature of the exhaust gas passing through the portion apart from the vicinity of the center axis in the normal condition.

For this reason, the temperature difference between the highest temperature and the lowest temperature in the temperature distribution of the exhaust gas flowing out of the PM trapper in which a fault is present is larger than the temperature difference between the highest temperature and the lowest temperature in the temperature distribution of the exhaust gas flowing out of the PM trapper that is in the normal condition.

Therefore, if the plurality of temperature sensors include a temperature sensor that measures the temperature of the exhaust gas just downstream of the vicinity of the faulty portion and a temperature sensor that measures the temperature of the exhaust gas just downstream of the portion significantly distant from the faulty portion, the difference between the highest value and the lowest value among the measurement values of the plurality of temperature sensors will be larger than the highest temperature and the lowest temperature in the radial direction temperature distribution of the exhaust gas flowing out of the PM trapper that is in the normal condition.

In view of the above, in the present invention, the difference between the highest temperature and the lowest temperature in the radial direction temperature distribution of the exhaust gas flowing out of the normal PM trapper may obtained in advance by, for example, experiments. This difference may be used as a reference temperature difference, and it may be determined that the PM trapper is faulty if the difference between the maximum value and the minimum value of the temperatures of the exhaust gas measured by the temperature sensors is larger than this reference value.

As described above, during the high exhaust gas temperature time, the highest temperature in the radial direction temperature distribution of the exhaust gas just downstream of the PM trapper will be the temperature of the exhaust gas flowing out of the central portion of the exit side end surface of the PM trapper (which temperature will be hereinafter referred to as the "center portion temperature" ), if the PM trapper is normal. If there is a fault in the PM trapper, the highest temperature will be the temperature of the exhaust gas flowing out of the faulty portion.

Therefore, it may be determined that the PM trapper is faulty if there is a temperature among the temperatures of the exhaust gas flowing out of portions other than the central portion of the exit side end surface of the PM trapper (which temperatures will be hereinafter referred to as "peripheral portion temperatures") that is higher than the center portion temperature.

Specifically, a central temperature sensor that measures the exhaust gas temperature at a position on the imaginary center axis of the exhaust passage and one or plurality of peripheral temperature sensors that measure the exhaust gas temperature at positions apart from the imaginary center axis of the exhaust passage may be provided, and it may be determined that the PM trapper is faulty if there is a measurement value among the measurement values of the peripheral temperature sensors that is larger than the measurement value of the central temperature sensor.

During the high PM trapper temperature time, conversely, it may be determined that the PM trapper is faulty if there is a measurement value among the measurement values of the peripheral temperature sensors that is smaller than the measurement value of the central temperature sensor.

By this fault determination method, a fault that occurs at a position apart from the imaginary center axis of the PM trapper can be detected.

In the present invention, the arrangement of the plurality of temperature sensors may include a plurality of on-isothermal-line temperature sensors that measure the exhaust gas temperature at different positions on an isothermal line of a specific temperature in the radial direction temperature distribution of the exhaust gas flowing out of the PM trapper at a time when the PM trapper is normal. The specific temperature is a temperature determined in advance.

If the PM trapper is normal, the measurement values of the on-isothermal-line temperature sensors should be substantially equal to each other. However, when there is a fault in the PM trapper, the isothermal lines in the radial direction temperature distribution just downstream of the PM trapper change with a change in the temperature distribution of the exhaust gas flowing out of the PM trapper. This means that the on-isothermal-line temperature sensors are not located on an isothermal line in the radial direction temperature distribution in the case in which a fault is present in the PM trapper. Therefore, some of the measurement values of the on-isothermal-line temperature sensors will indicate different temperatures.

Thus, it may be determined that the PM trapper is faulty if some of the measurement values of the on-isothermal-line temperature sensors are different. Specifically, it may be determined that the PM trapper is faulty if there are measurement values of the on-isothermal-line temperature sensors whose difference is larger than a predetermined reference value.

In the above described configuration, the radial direction temperature distribution of the exhaust gas flowing out of the PM trapper is estimated based on the measurement values of the plurality of temperature sensors that measure the temperature of the exhaust gas just downstream of the PM trapper. However, one or some of the temperatures of the exhaust gas at a plurality of positions just downstream of the PM trapper may be estimated based on the temperature of the exhaust gas flowing into the PM trapper. By adopting this feature, the number of the temperature sensors to be provided can be reduced, and accordingly it is possible to make the fault detection system for the PM trapper simpler and to reduce cost.

The temperature estimation means for estimating the temperature of the exhaust gas just downstream of the PM trapper makes estimation based on relationship between the temperature of the exhaust gas flowing into the PM trapper and the temperature of the exhaust gas flowing out of the PM trapper in an normal PM trapper. This relationship is obtained in advance by, for example, experiments.

In a fault determination method for a PM trapper in the case of the configuration including temperature estimation means in which, for example, the center portion temperature is estimated by the temperature estimation means and the peripheral portion temperatures are measured by temperature sensors, it may be determined that the PM trapper is faulty on condition that there is a value among a plurality of measured peripheral portion temperature values that is larger than the estimated central portion temperature value (at a high exhaust gas temperature time).

In the case of a configuration in which the central portion temperature is measured by a temperature sensor and the peripheral portion temperature is estimated by temperature estimation means, it may be determined that the PM trapper is faulty on condition that the measured center portion temperature value is smaller than the estimated peripheral portion temperature value (at a high exhaust gas temperature time).

In the case of a configuration in which one or some of a plurality of exhaust gas temperatures at positions on an isothermal line of a specific temperature in the radial direction temperature distribution of the exhaust gas just downstream of the normal PM trapper (which exhaust gas temperatures will be hereinafter referred to as "on-isothermal-line temperatures") are estimated by temperature estimation means and the others are measured by temperature sensors, it may be determined that the PM trapper is faulty on condition that there is a value among the measured on-isothermal-line temperature values that is different from the estimated on-isothermal-line temperature values.

As described above, when there is a fault in a PM trapper, the flow speed and flow rate of the exhaust gas passing through the faulty portion tends to become higher than the flow speed and flow rate of the exhaust gas passing through the non-faulty portion. This means that the radial direction flow speed distribution of the exhaust gas just downstream of the PM trapper reflects the state of fault of the PM trapper.

In view of this, in the present invention, a fault of the PM trapper may be detected based on the radial direction flow speed distribution of the exhaust gas just downstream of the PM trapper.

In the present invention, fault detection for the PM trapper may be performed when the temperature difference between the temperature of the exhaust gas flowing into the PM trapper and the temperature of the PM trapper is larger than a specific temperature. Here, the specific temperature is determined in advance.

This is because the larger the temperature difference between the temperature of the exhaust gas flowing into the PM trapper and the temperature of the PM trapper is, the more significant the difference between the temperature of the exhaust gas having passed through the faulty portion and the temperature of the exhaust gas having passed through the non-faulty portion is. Thus, a fault of the PM trapper can be detected more reliably.

The temperature difference between the temperature of the exhaust gas flowing into the PM trapper and the temperature of the PM trapper becomes large, for example, at the time of cold start or at the time when regeneration process of the PM trapper is executed.

The fault detection system for a PM trapper according to the present invention described in the foregoing can be suitably applied to a PM trapper of a wall flow type.

This is because in the wall flow type PM trapper, the contact area of the exhaust gas passing through the PM trapper and the substrate of the PM trapper is large, and hence the difference between heat exchange occurring between the exhaust gas passing through the faulty portion and the PM trapper and heat exchange occurring between the exhaust gas passing through the non-faulty portion and the PM trapper becomes more significant.

### BRIEF DESCRIPTION OF THE DRAWINGS

Fig. 1 is a diagram showing the general configuration of the air-intake system and exhaust system of an internal combustion engine in an embodiment of the present invention.
Fig. 2 is a diagram showing the radial direction temperature distribution of the exhaust gas just downstream of a PM trapper when the PM trapper is normal in the embodiment of the present invention.
Fig. 3 is a diagram showing the radial direction temperature distribution of the exhaust gas just downstream of a PM trapper when there is a fault in the PM trapper in the embodiment of the present invention.
Fig. 4 is a diagram showing the radial direction temperature distribution of the exhaust gas just downstream of a PM trapper when there is a fault in the PM trapper in the embodiment of the present invention.
Fig. 5 shows a way of arranging the temperature sensors in the embodiment of the present invention.
Fig. 6 is a graph showing changes in the measurement values of respective temperature sensors with time when the PM trapper is normal in the embodiment of the present invention.
Fig. 7 is a diagram showing a relationship between the radial direction temperature distribution of the exhaust gas just downstream of the PM trapper and the positions of the temperature sensors in a case in which there is a fault in the PM trapper in the embodiment of the present invention.
Fig. 8 is a graph showing changes in the measurement values of the respective temperature sensors with time in a case in which there is a fault in the PM trapper in the embodiment of the present invention.
Fig. 9 is a diagram showing a relationship between the radial direction temperature distribution of the exhaust gas just downstream of the PM trapper and the positions of the temperature sensors in a case in which there is a fault in the PM trapper in the embodiment of the present invention.
Fig. 10 is a graph showing changes in the measurement values of the respective temperature sensors with time in a case in which there is a fault in the PM trapper in the embodiment of the present invention.
Fig. 11 is a flow chart of a routine for detecting a fault in the PM trapper in the embodiment of the present invention.

### THE BEST MODE FOR CARRYING OUT THE INVENTION

In the following, the best mode for carrying out the present invention will be described in detail by way of example, with reference to the drawings. The dimensions, materials, shapes and relative positions etc. of the components of the embodiment described here are not intended to limit the technical scope of the invention only to them unless specifically described in particular.

### (Embodiment 1)

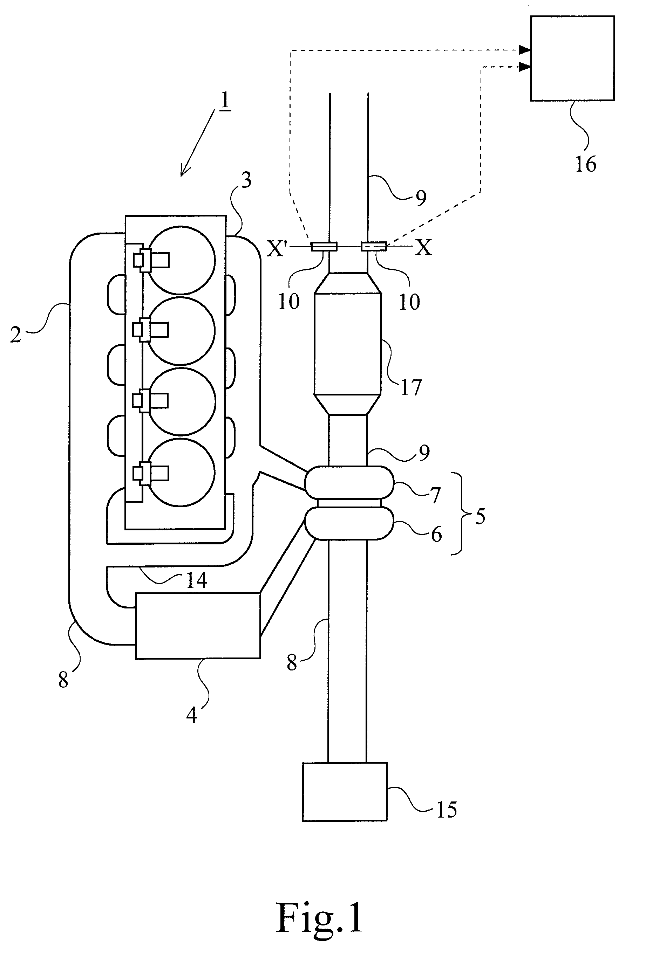

Fig. 1 is a diagram showing the general configuration of the air-intake system and exhaust system of an internal combustion engine to which the fault detection system for a PM trapper according to the present invention is applied.

The internal combustion engine 1 shown in Fig. 1 is an water-cooled, four-cycle diesel engine having four cylinders.

To the internal combustion engine 1 is connected an intake manifold 2, and each branch pipe of the intake manifold 2 is in communication with the combustion chamber of each cylinder via an intake port. To the intake manifold 2 is connected an intake passage 8. An intercooler 4 that causes heat exchange between the intake air and the external atmosphere is provided at a point in the intake passage 8. A compressor housing 6 of a turbocharger 5 that operates using the energy of the exhaust gas as the drive source is provided upstream of the intercooler 4. An air cleaner 15 is provided upstream of the compressor housing 6.

To the internal combustion engine 1 is connected an exhaust manifold 3, and each branch pipe of the exhaust manifold 3 is in communication with the combustion chamber of each cylinder via an exhaust port. To the exhaust manifold 3 is connected a turbine housing 7 of the turbocharger 5. To the turbine housing 7 is connected an exhaust passage 9. The exhaust passage 9 is provided with a wall-flow type PM trapper 17. An NOx storage reduction catalyst is supported on the PM trapper 17. The PM trapper 17 traps particulate matter in the exhaust gas. The exhaust passage 9 is open to the atmosphere in the downstream of the PM trapper 17.

The exhaust manifold 3 and the intake manifold 2 are in communication through an EGR passage 14. A part of the exhaust gas recirculates to the combustion chambers of the internal combustion engine 1 through the EGR passage 14. This causes the combustion temperature in the combustion chambers to decrease to thereby reduce the amount of nitrogen oxides generated in the combustion process.

A plurality of temperature sensors 10 that measure the temperature of the exhaust gas flowing out of the PM trapper 17 are provided in the exhaust passage 9 just downstream of the PM trapper 17. It is possible to estimate the radial direction temperature distribution of the exhaust gas flowing out of the PM trapper 17 from the measurement values of the temperature sensors 10. A specific way of arranging the temperature sensors 10 will be described later.

To the internal combustion engine 1 having the above described configuration is annexed an ECU 16 or an electronic control computer that controls the internal combustion engine 1. The ECU 16 controls the operation state of the internal combustion engine 1 in response to the operation conditions of the internal combustion engine 1 and driver's requests. The temperature sensors 10 are connected to the ECU 16 through electrical wiring, and the output signals thereof are input to the ECU 16.

At a time when a predetermined amount of PM has been trapped on the PM trapper 17, a regeneration process for the PM trapper 17 is performed. The predetermined amount is the upper limit value of the PM deposition amounts that will not affect the engine output power of the internal combustion engine 1.

In the regeneration process, sub injection is performed in the internal combustion engine 1 separately from main injection for generating torque. Since this causes the temperature of the exhaust gas discharged from the internal combustion engine 1 to rise, the temperature of the PM trapper 17 is increased by the high temperature exhaust gas, and oxidation reaction of the PM deposited on the PM trapper 17 is promoted. In addition, fuel may be added into the exhaust gas in the upstream of the exhaust gas purification apparatus 17. In this case, the fuel added into the exhaust gas reacts as a reducer in the oxidation catalyst supported on the substrate of the PM trapper 17. The reaction heat generated in this reaction causes the temperature of the PM trapper 17 to rise, whereby the oxidation reaction of the PM deposited on the PM trapper 17 is promoted.

If the regeneration process is performed in a state in which too much PM is trapped on the PM trapper 17, the PM oxidation reaction may proceed rapidly to generate a very large amount of reaction heat, and a fault such as melting of the substrate of the PM trapper 17 may occur in some cases.

The portion in which such a fault occurs is brought into a holed state, and the PM trapping ability is deteriorated. Therefore, it is necessary to detect such a fault as early as possible. The fault detection system for PM trapper according to this embodiment is characterized in that it detects a fault in the PM trapper 17 based on the temperature distribution of the exhaust gas flowing out of the PM trapper 17, in the radial directions of the exhaust passage. In the following, relationship between the radial direction temperature distribution of the exhaust gas flowing out of the PM trapper 17 and the faulty state of the PM trapper will be described.

Since the exhaust gas passing through the PM trapper 17 exchanges heat with the substrate of the PM trapper 17, the temperature of the exhaust gas changes. For example, during the time in which the temperature of the exhaust gas flowing into the PM trapper 17 is higher than the temperature of the PM trapper 17 (which time will be hereinafter referred to as "high exhaust gas temperature time") as is the case at the time of cold start, the exhaust gas is cooled as it passes through the PM trapper 17, and hence the temperature of the exhaust gas flowing out of the PM trapper 17 becomes lower as compared to the temperature of the exhaust gas flowing into the PM trapper 17. On the other hand, during the time in which the temperature of the PM trapper 17 is higher than the temperature of the exhaust gas (which time will be hereinafter referred to as "high PM trapper temperature time") as is the case during the regeneration process or just after execution of the regeneration process, the exhaust gas is heated as it passes through the PM trapper 17, and therefore the temperature of the exhaust gas flowing out of the PM trapper 17 becomes higher as compared to the temperature of the exhaust gas flowing into the PM trapper 17.

The efficiency of the heat exchange between the PM trapper 17 and the exhaust gas depends on the flow speed and flow rate of the exhaust gas passing through the PM trapper 17. Since the closer to the imaginary center axis of the PM trapper 17, the higher the flow speed and flow rate of the exhaust gas tends to be, heat exchange between the exhaust gas passing the vicinity of the imaginary center axis of the PM trapper 17 and the PM trapper 17 is not apt to occur. Accordingly, the closer to the imaginary center axis of the PM trapper 17, the smaller the degree of change in the temperature of the exhaust gas as it passes through the PM trapper 17.

Since the efficiency of heat exchange between the exhaust gas and the PM trapper 17 varies depending on the portion of the PM trapper 17 through which the exhaust gas passes as described above, the degree of change in the temperature of the exhaust gas passing through the PM trapper 17 varies depending on the portion of the PM trapper 17 through which the exhaust gas passes. This means that the temperature of the exhaust gas flowing out of the PM trapper 17 is not uniform.

For example, during the high exhaust gas temperature time, the tendency of the radial direction temperature distribution of the exhaust gas flowing out of the PM trapper 17 is that the closer to the imaginary center axis of the PM trapper 17 the position is, the higher the temperature is. On the other hand, in the temperature distribution during the high PM trapper temperature time, the closer to the imaginary center axis of the PM trapper 17 the position is, the lower the temperature is.

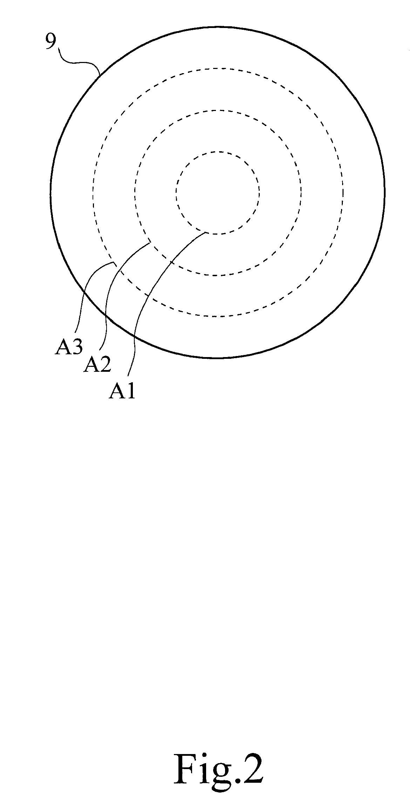

Fig. 2 is a diagram illustrating the temperature distribution of the exhaust gas in a plane perpendicular to the imaginary center axis of the exhaust passage 9 just downstream of the PM trapper 17 (i.e. the plane indicated by X-X' in Fig. 1). Broken lines A1, A2 and A3 in Fig. 2 are isothermal lines at exhaust gas temperatures of TA1, TA2 and TA3 respectively. During the high exhaust gas temperature time, for example, the relation of the temperatures is TA1 > TA2 > TA3, since the closer to the imaginary center axis of the PM trapper 17 the position is, the higher the temperature is.

On the other hand, when a fault such as a crack is present in the PM trapper 17, the tendency of the temperature distribution of the exhaust gas flowing out of the PM trapper 17 is different from that described above.

When a fault occurs in the PM trapper 17, the portion in which the fault occurs is brought into a holed state. This causes the contact area of the substrate of the PM trapper 17 and the exhaust gas to decrease, which leads to a decrease in the efficiency of heat exchange between the PM trapper 17 and the exhaust gas.

Furthermore, since pressure loss in the faulty portion becomes lower than that in the non-faulty portion, the exhaust gas flowing into the PM trapper 17 selectively flows into the faulty portion. For this reason, in the exhaust gas passing through the PM trapper 17, the quantity of the exhaust gas passing through the faulty portion becomes larger as compared to the quantity of the exhaust gas passing through the non-faulty portion. Therefore, the flow speed of the exhaust gas flowing through the faulty portion becomes higher than the flow speed of the exhaust gas flowing through the non-faulty portion. For this reason, the efficiency of heat exchange between the exhaust gas passing through the faulty portion and the PM trapper 17 becomes lower than the efficiency of heat exchange between the exhaust gas passing through the non-faulty portion and the PM trapper 17.

As a result, the change in the temperature of the exhaust gas passing through the faulty portion becomes smaller than the change in the temperature of the exhaust gas passing through the non-faulty portion. This change in the temperature is smaller than the change in the temperature of the exhaust gas passing through the vicinity of the imaginary center axis of the normal PM trapper 17. Conversely, the change in the temperature of the exhaust gas passing through the non-faulty portion tends to be larger than the change in the temperature of the exhaust gas passing a position apart from the center axis of the normal PM trapper 17.

For example, during the high exhaust temperature time, the tendency of the radial direction temperature distribution of the exhaust gas flowing out of the PM trapper 17 is that the closer to the faulty portion the position is, the higher the temperature is, and the temperature of the non-faulty portion apart from the faulty portion is low. On the other hand, during the high PM trapper temperature time, the tendency of the radial direction temperature distribution of the exhaust gas flowing out of the PM trapper 17 is that the closer to the faulty portion the position is, the lower the temperature is, and the temperature of the non-faulty portion apart from the faulty portion is high. In both cases, the temperature difference between the highest temperature and the lowest temperature in the radial direction temperature distribution of the exhaust gas flowing out of the PM trapper 17 becomes larger than the temperature difference between the highest temperature and the lowest temperature in the radial direction temperature distribution in the case where the PM trapper 17 is normal.

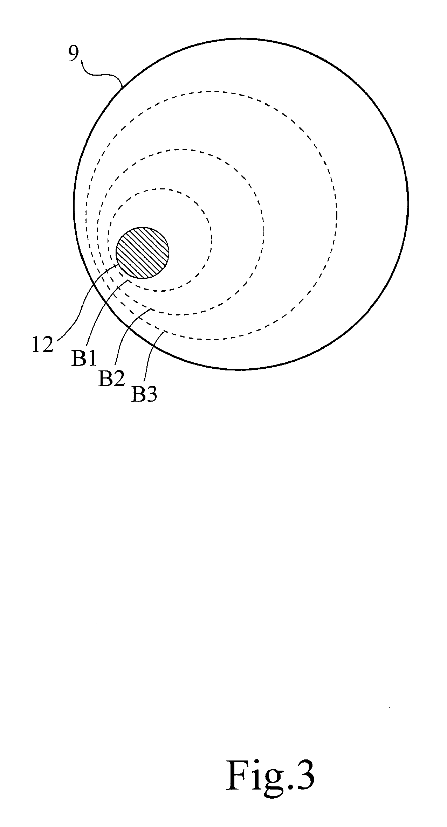

Fig. 3 is a diagram illustrating the temperature distribution in the radial direction of the exhaust passage of the exhaust gas flowing just downstream of the PM trapper 17 at a time when a fault is present in the PM trapper 17. Broken lines B1, B2 and B3 in Fig. 3 are isothermal lines at exhaust gas temperatures of TB1, TB2 and TB3 respectively. The hatched area 12 represents the faulty portion. For example, during the high exhaust gas temperature time, the relationship TB1 > TB2 > TB3 holds, since the closer to the faulty portion 12 the position is, the higher the temperature of the exhaust gas is. In the case where a fault is present at a position apart from the imaginary center axis of the PM trapper 17 as shown in Fig. 3, the radial direction temperature distribution of the exhaust gas flowing out of the PM trapper 17 varies largely from the radial direction temperature distribution in the case where the PM trapper 17 is normal.

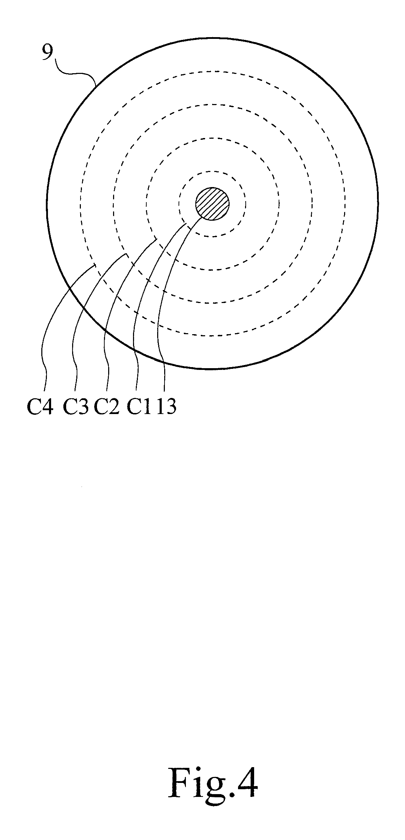

Fig. 4 is a diagram illustrating the temperature distribution in the radial direction of the exhaust passage of the exhaust gas flowing just downstream of the PM trapper 17 at a time when a fault is present in a portion near the center axis of the PM trapper 17. Broken lines C1, C2, C3 and C4 in Fig. 4 are isothermal lines at exhaust gas temperatures of TC1, TC2, TC3 and TC4 respectively. The hatched area 13 represents the faulty portion. For example, during the high exhaust temperature time, the temperature of the exhaust gas flowing out of the faulty portion 13 is the highest, and the more distant from the faulty portion 13 the position is, the lower the temperature of the exhaust gas is. In cases where a fault is present in a portion near the imaginary center axis of the PM trapper 17 as shown in Fig. 4, although the temperature distribution of the exhaust gas flowing out of the PM trapper 17 has a tendency similar to that in the case where the PM trapper 17 is normal, the density of the isothermal lines is higher than that in the case where the PM trapper 17 is normal. In other words, the gradient of the change in the temperature in the radial direction temperature distribution is larger than that in the case where the PM trapper 17 is normal. Therefore, the temperature difference between the highest temperature and the lowest temperature in the radial direction temperature distribution of the exhaust gas flowing out of the PM trapper 17 is larger than that in the case where the PM trapper 17 is normal.

As described in the foregoing, the temperature distribution of the exhaust gas flowing out of the PM trapper 17 reflects the faulty state of the PM trapper 17. Therefore, a fault in the PM trapper 17 can be detected based on the radial direction temperature distribution of the exhaust gas just downstream of the PM trapper 17.

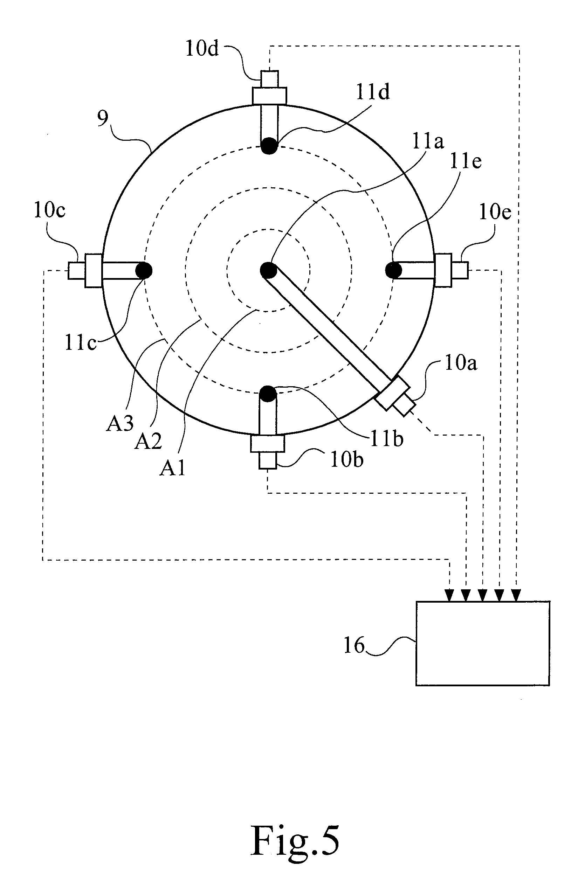

In this embodiment, change in the radial direction temperature distribution of the exhaust gas flowing out of the PM trapper 17 caused by a fault in the PM trapper 17 is estimated based on measurement values of the temperature sensors 10 provided in the exhaust passage 9 just downstream of the PM trapper 17. A specific way of arranging the temperature sensors 10 is illustrated in Fig. 5. Fig. 5 is a cross sectional view of the exhaust passage 9 just downstream of the PM trapper 17 taken on a cross sectional plane perpendicular to the imaginary center axis of the exhaust passage 9 (i.e. the X-X' cross section in Fig. 1).

In this embodiment, there are five temperature sensors 10 (namely, temperature sensors 10a, 10b, 10c, 10d and 10e). The temperature detection elements 11a, 11b, 11c, 11d and 11e of the respective temperature sensors are arranged in such a way as to be positioned on the X-X' cross section.

The temperature sensing element 11a of the temperature sensor 10a is positioned on the imaginary center axis of the exhaust passage 9 and measures the temperature of the exhaust gas flowing out of the portion of PM trapper 17 in the vicinity of the imaginary center axis. (The temperature sensor 10a will be hereinafter referred to as the "central temperature sensor".) All of the four temperature sensing elements 11b, 11c, 11d and 11e other than the temperature sensing element 11a are positioned on an isothermal line A3 and measure the temperature of the exhaust gas flowing out of the portions of the PM trapper 17 apart from the imaginary center axis. (The temperature sensors 10b, 10c, 10d and 10e will be hereinafter referred to as the "peripheral temperature sensors".)

Each of the five temperature sensors 10a, 10b, 10c, 10d and 10e is connected to the ECU 16 through electrical wiring so that a measurement signal of the temperature sensing element of each temperature sensor is input to the ECU 16.

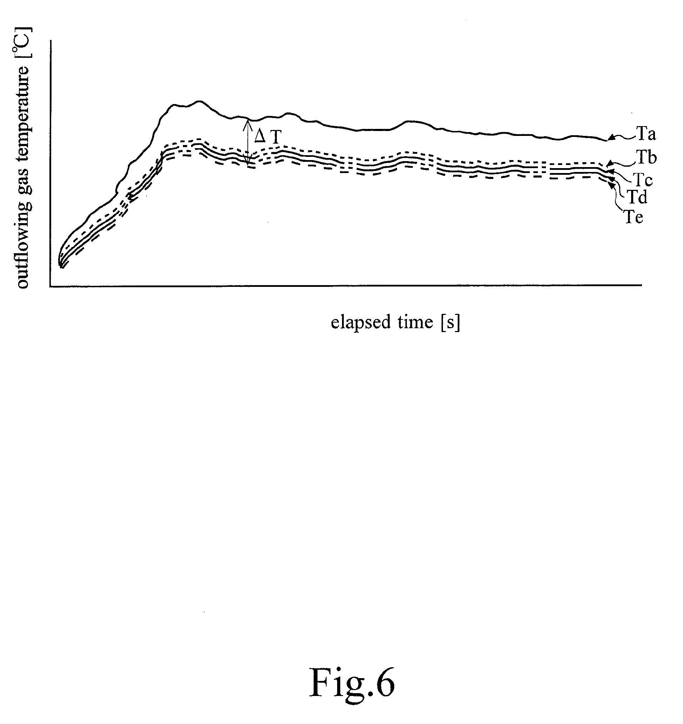

Fig. 6 is a graph showing changes in the measurement values of the temperature sensors 10a, 10b, 10c, 10d and 10e with time in the case where the PM trapper 17 is normal. The horizontal axis of Fig. 6 represents time, and the vertical axis represents temperature. The solid curve in the graph shows the change in the measurement value Ta of the central temperature sensor 10a with time, the dotted curve shows the change in the measurement value Tb of the peripheral temperature sensor 10b with time, the alternate short and long dashed curve shows the change in the measurement value Tc of the peripheral temperature sensor 10c with time, the chain double-dashed curve shows the change in the measurement value Td of the peripheral temperature sensor 10d with time, and the short dashed curve shows the change in the measurement value Te of the peripheral temperature sensor 10e with time.

Since the temperature sensing elements 11b, 11c, 11d and 11e of the peripheral temperature sensors 10b, 10c, 10d and 10e are positioned on the isothermal line A3, the temperatures Tb, Tc, Td and Te measured by them are substantially equal to each other as shown in Fig. 6. (In Fig. 6, in order to facilitate understanding of the graph, the curves representing the measurement values of the peripheral temperature sensors are drawn in an offset manner so that the curves do not overlap.) The measurement value Ta of the central temperature sensor 10a is the highest.

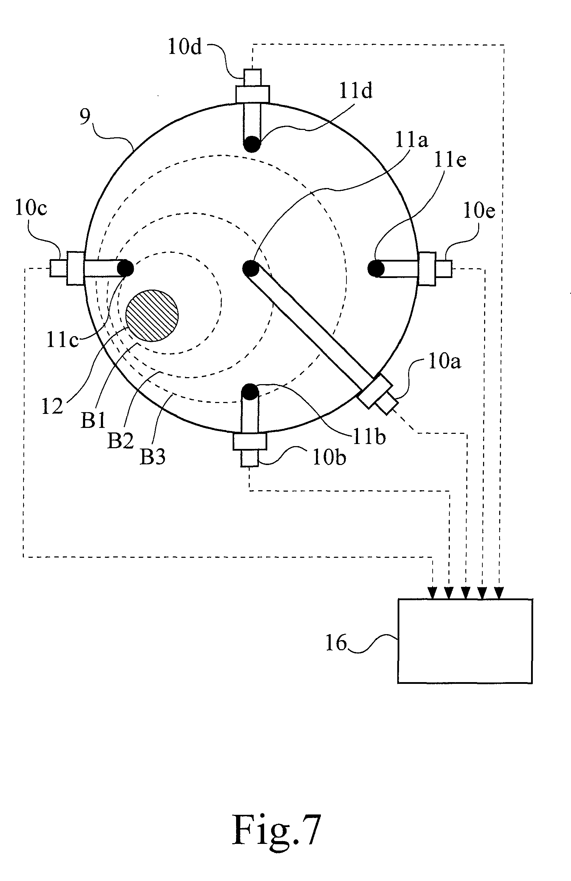

On the other hand, in the case where a fault shown in Fig. 3 is present in the PM trapper 17, the positional relationship between the isothermal lines in the radial direction temperature distribution of the exhaust gas just downstream of the PM trapper 17 and the temperature sensors is as shown in Fig. 7. In the case where a fault 12 occurs in the PM trapper 17, as shown in Fig. 7, since the temperature sensing element 11c located substantially on isothermal line B1 is the closest to the faulty portion 12 among the five temperature sensing elements, the measurement value Tc of the peripheral temperature sensor 10c is the highest among the measurement values of the five temperature sensors. The measurement values decrease in order of the measurement value Ta of the central temperature sensor 10a whose temperature sensing element 11a is located in the vicinity of isothermal line B2, the measurement values Tb, Td of the peripheral temperature sensors 10b, 10d whose temperature sensing elements 11b, 11d are located in the vicinity of isothermal line B3, and the measurement value Te of the peripheral temperature sensor 10e whose temperature sensing element 11e is located at a position farther from the faulty portion 12 than isothermal line B3 is.

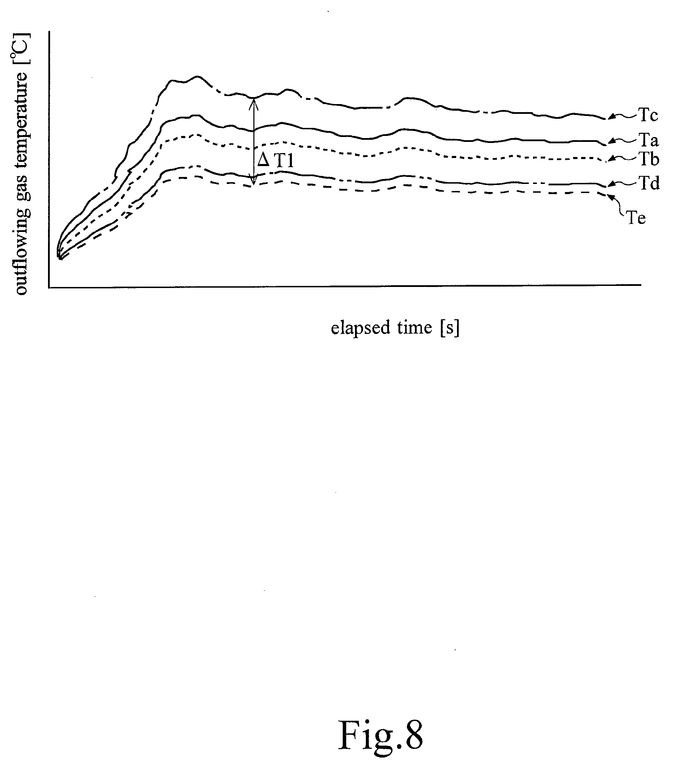

Fig. 8 is a graph showing changes in the measurement values of the temperature sensors 10a, 10b, 10c, 10d and 10e with time in the case where the fault shown in Fig. 3 is present in the PM trapper 17. The horizontal axis of Fig. 8 represents time, and the vertical axis represents temperature. The solid curve in the graph shows the change in the measurement value Ta of the central temperature sensor 10a with time, the dotted curve shows the change in the measurement value Tb of the peripheral temperature sensor 10b with time, the alternate short and long dashed curve shows the change in the measurement value Tc of the peripheral temperature sensor 10c with time, the chain double-dashed curve shows the change in the measurement value Td of the peripheral temperature sensor 10d with time, and the short dashed curve shows the change in the measurement value Te of the peripheral temperature sensor 10e with time.

As shown in Fig. 8, temperatures Tb, Tc, Td and Te, which used to be substantially equal to each other in the case where the PM trapper 17 is normal, are different from each other.

Therefore, it is possible to determine that a fault is present in the PM trapper 17 on condition that some of the temperature measurement values Tb, Tc, Td and Te of the peripheral temperature sensors 10b, 10c, 10d and 10e are different.

In addition, the temperature difference ΔT1 between the highest temperature Tc and the lowest temperature Te in the case where the fault 12 is present in the PM trapper 17 is larger as compared to the temperature difference ΔT between the highest temperature Ta and the lowest temperature Tb ≈ Tc ≈ Td ≈ Te in the case where the PM trapper 17 is normal.

Therefore, the temperature difference ΔT between the highest temperature and the established temperature in the case where the PM trapper 17 is normal may be used as a reference value, and it may be determined that a fault is present in the PM trapper 17 on condition that the temperature difference between the highest temperature and the lowest temperature among the measurement values Ta, Tb, Tc, Td and Te of the five temperature sensors 10 exceeds the reference value.

Alternatively, it may be determined that a fault is present in the PM trapper 17 on condition that one or some of the measurement values Tb, Tc, Td and Te of the peripheral temperature sensors 10b, 10c, 10d and 10e are higher than the measurement value Ta of the central temperature sensor 10a. This is because if the PM trapper 17 is normal, then the temperature in the central portion should be the highest.

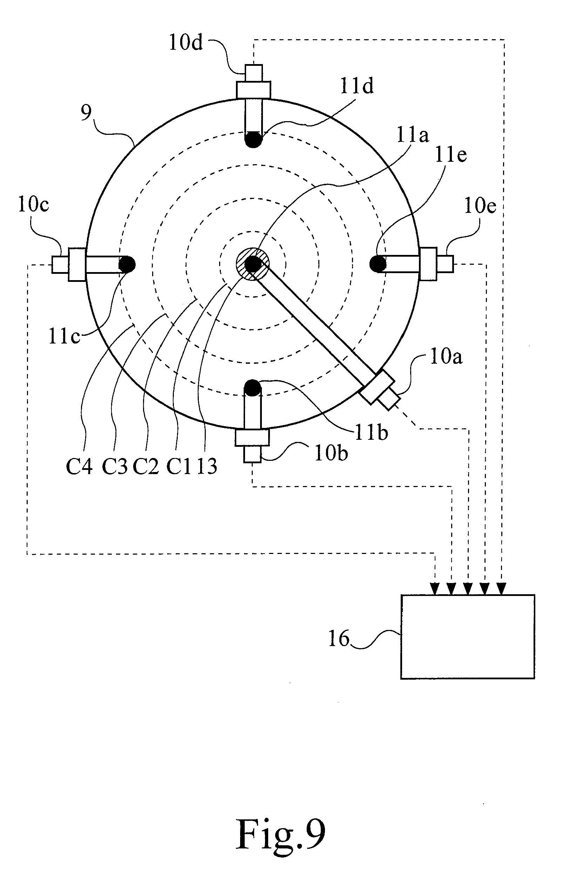

On the other hand, in the case where a fault as shown in Fig. 4 is present in the PM trapper 17, the positional relationship between the isothermal lines in the radial direction temperature distribution of the exhaust gas just downstream of the PM trapper 17 and the temperature sensors is as shown in Fig. 9. In the case where the fault 13 as shown in Fig. 9 is present in the PM trapper 17, since the temperature sensing elements 11b, 11c, 11d and 11e of the peripheral temperature sensors 10b, 10c, 10d and 10e will be located on isothermal line C4 even after the occurrence of the fault, the measurement values Tb, Tc, Td and Te of the peripheral temperature sensors 10b, 10c, 10d and 10e will be substantially equal to each other.

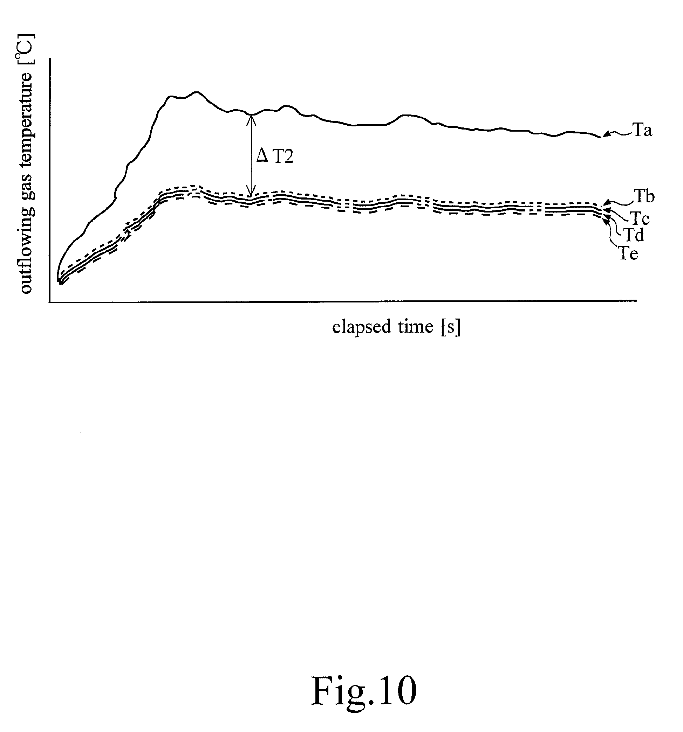

Fig. 10 is a graph showing changes in the measurement values of the temperature sensors 10a, 10b, 10c, 10d and 10e with time in the case where the fault shown in Fig. 4 is present in the PM trapper 17. The horizontal axis of Fig. 10 represents time, and the vertical axis represents temperature. The solid curve in the graph shows the change in the measurement value Ta of the central temperature sensor 10a with time, the dotted curve shows the change in the measurement value Tb of the peripheral temperature sensor 10b with time, the alternate short and long dashed curve shows the change in the measurement value Tc of the peripheral temperature sensor 10c with time, the chain double-dashed curve shows the change in the measurement value Td of the peripheral temperature sensor 10d with time, and the short dashed curve shows the change in the measurement value Te of the peripheral temperature sensor 10e with time.

As shown in Fig. 10, the measurement values Tb, Tc, Td and Te of the peripheral temperature sensors 10b, 10c, 10d and 10e are substantially equal to each other as is the case when the PM trapper 17 is normal. Therefore, a fault in the PM trapper cannot be detected based on whether some of the measurement values of the peripheral temperature sensors are different in a similar manner as when a fault is present in the vicinity of the imaginary center axis of the PM trapper 17.

In this case, however, the gradient of the change in the temperature in the radial direction temperature distribution about the faulty portion 13 at the center is larger as compared to that in the case where the PM trapper 17 is normal, and therefore the temperature difference ΔT2 of the temperature Ta of the central portion and the temperature Tb ≈ Tc ≈ Td ≈ Te of peripheral portions will be larger than the temperature difference ΔT between the temperature of the central portion and the temperature of peripheral portions in the case where the PM trapper 17 is normal. Therefore, a fault in the PM trapper 17 can be detected based on whether or not the temperature difference between the highest temperature and the lowest temperature among the measurement values Ta, Tb, Tc, Td and Te of the five temperature sensors 10 exceeds the aforementioned reference value ΔT.

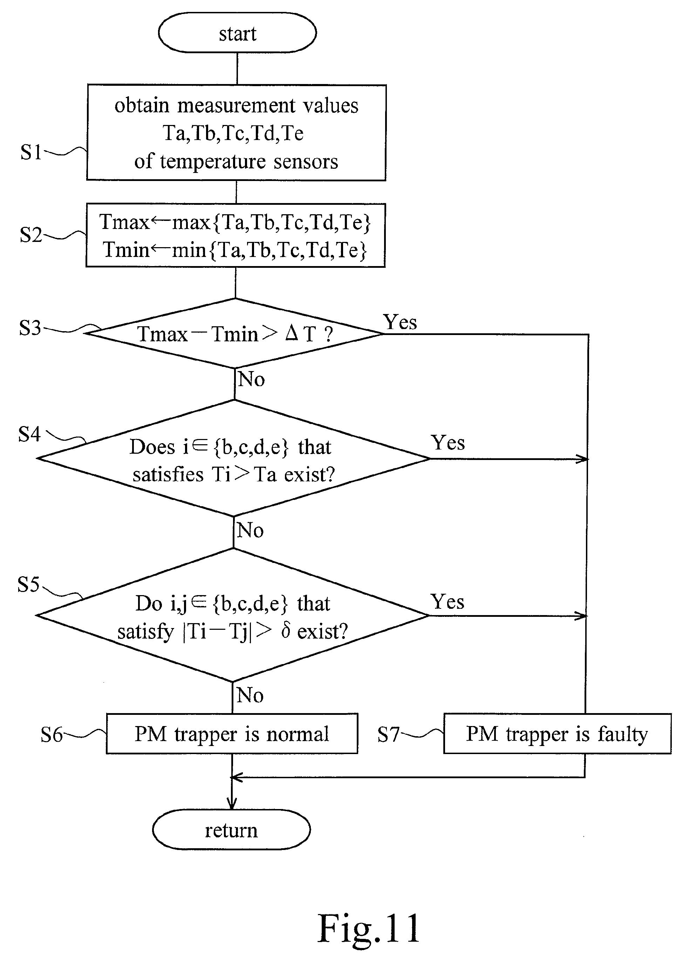

In the following, detection of a fault in the PM trapper 17 performed by the ECU 16 will be described based on the flow chart of Fig. 11. Fig. 11 is a flow chart of a routine for performing detection of a fault in the PM trapper 17. This routine is executed by the ECU 16 repeatedly at regular time intervals.

First in step S1, the ECU 16 obtains measurement values Ta, Tb, Tc, Td and Te of the five temperature sensors 10a, 10b, 10c, 10d and 10e.

Next, in step S2, the CPU 16 obtains the highest temperature Tmax and the lowest temperature Tmin among the measurement values Ta, Tb, Tc, Td and Te.

Next, in step S3, the ECU 16 makes a determination as to whether the temperature difference between the highest temperature Tmax and the lowest temperature Tmin is larger than the reference value ΔT.

If the determination in step S3 is affirmative, the ECU 16 determines that the PM trapper 17 is faulty (step S7) and terminates execution of this routine. On the other hand, if the determination in step S3 is negative, the ECU 16 proceeds to the next step S4.

In step S4, the ECU 16 makes a determination as to whether or not one or some of the temperatures Tb, Tc, Td and Te of peripheral portions are higher than the temperature Ta of the central portion.

If the determination in step S4 is affirmative, the ECU 16 determines that the PM trapper 17 is faulty (step S7), and terminates execution of this routine. On the other hand, if the determination in step S4 is negative, the ECU 16 proceeds to the next step S5.

In step S5, the ECU 16 makes a determination as to whether or not some of the temperatures Tb, Tc, Td and Te of peripheral portions are different. Here, if a temperature difference between peripheral temperatures Ti and Tj (i, j ∈ {b, c, d, e}) is larger than a specific value δ, it is determined that values Ti and Tj are different. The specific value δ is determined in advance.

If the determination in step S5 is affirmative, the ECU 16 determines that the PM trapper 17 is faulty step S7), and terminates execution of this routine. On the other hand, if the determination in step S5 is negative, the ECU 16 determines that the PM trapper 17 is normal (step S6), and once terminates execution of this routine.

By executing the above described fault detection routine, a fault in the PM trapper 17 can be detected based on the temperature distribution of the exhaust gas flowing out of the PM trapper 17. Since the temperature of the exhaust gas flowing out of the PM trapper 17 is less likely to be affected by the amount of PM deposited in the PM trapper 17 than the pressure difference across the PM trapper 17 is, a fault of the PM trapper 17 can be detected more accurately.

The embodiment described in the foregoing is an example taken to explain the present invention, and various modifications can be made to the above described embodiment without departing from the essence of the present invention. For example, the number of the temperature sensors 10 may be any plural number. The larger the number is, the more accurately the radial direction temperature distribution of the exhaust gas temperature just downstream of the PM trapper 17 can be estimated. Some of the exhaust gas temperatures at a plurality of positions just downstream of the PM trapper 17 may be estimated based on the temperature of the exhaust gas flowing into the PM trapper 17. By adopting this feature, the number of the temperature sensors 10 to be provided can be reduced. In the above described embodiment, a fault of the PM trapper 17 is detected based on a change in the radial direction temperature distribution of the exhaust gas temperature just downstream of the PM trapper 17. This change in the radial direction temperature distribution of the exhaust temperature is caused by a change in the flow speed and/or flow rate of the exhaust gas just downstream of the PM trapper 17 due to a fault in the PM trapper 17. Therefore, a change in the flow speed and/or flow rate of the exhaust gas at a position just downstream of the PM trapper 17 may be detected, and a fault in the PM trapper 17 may be detected based on the result of the detection.

### INDUSTRIAL APPLICABILITY

By the present invention, a fault in a PM trapper can be detected with improved accuracy.

## Claims

1. A fault detection system for a PM trapper **characterized by** comprising:
a PM trapper provided in an exhaust passage of an internal combustion engine;
detection means for detecting a temperature distribution in a radial direction of said exhaust passage of exhaust gas flowing out of said PM trapper; and
determination means for determining a fault of said PM trapper based on said radial direction temperature distribution detected by said detection means.

2. A fault detection system for a PM trapper according to claim 1 **characterized by** further comprising a plurality of temperature sensors arranged in the radial direction of the exhaust passage just downstream of said PM trapper, wherein said detection means estimates said radial direction temperature distribution based on the exhaust gas temperatures measured by said plurality of temperature sensors.

3. A fault detection system for a PM trapper according to claim 2, **characterized in that** said determination means determines that said PM trapper is faulty on condition that the temperature difference between the highest temperature and the lowest temperature among the measurement values of said temperature sensors is larger than a predetermined reference temperature difference.

4. A fault detection system for a PM trapper according to claim 2, **characterized in that** said plurality of temperature sensors include a central temperature sensor that measures exhaust gas temperature at a position on an imaginary center axis of said exhaust passage and one or plurality of peripheral temperature sensors that measure exhaust gas temperature at positions apart from the imaginary center axis of said exhaust passage, and said determination means determines that said PM trapper is faulty on condition that there is a measurement value among the measurement values of said peripheral temperature sensors that is larger than the measurement value of said central temperature sensor when the temperature of the exhaust gas flowing into said PM trapper is higher than the temperature of the PM trapper.

5. A fault detection system for a PM trapper according to claim 2, **characterized in that** said plurality of temperature sensors includes a central temperature sensor that measures exhaust gas temperature at a position on an imaginary center axis of said exhaust passage and one or plurality of peripheral temperature sensors that measure exhaust gas temperature at positions apart from the imaginary center axis of said exhaust passage, and said determination means determines that said PM trapper is faulty on condition that there is a measurement value among the measurement values of said peripheral temperature sensors that is smaller than the measurement value of said central temperature sensor when the temperature of the exhaust gas flowing into said PM trapper is lower than the temperature of the PM trapper.

6. A fault detection system for a PM trapper according to claim 2, **characterized in that** said plurality of temperature sensors include a plurality of on-isothermal-line temperature sensors that measure exhaust gas temperature at different positions on an isothermal line of a specific temperature in said radial direction temperature distribution at a time when said PM trapper is normal, and said determination means determines that said PM trapper is faulty on condition that there are measurement values of said on-isothermal-line temperature sensors whose difference is larger than a predetermined reference value.

7. A fault detection system for a PM trapper according to claim 1, **characterized by** further comprising one or a plurality of temperature sensors arranged in the radial direction of the exhaust passage just downstream of said PM trapper and one or a plurality of temperature estimation means for estimating exhaust gas temperature at radial positions in the exhaust passage just downstream of said PM trapper based on the temperature of the exhaust gas flowing into the PM trapper, wherein said detection means estimates said radial direction temperature distribution based on the exhaust gas temperature measured by said temperature sensors and the exhaust gas temperature estimated by said temperature estimation means.

8. A fault detection system for a PM trapper **characterized by** comprising:
a PM trapper provided in an exhaust passage of an internal combustion engine;
flow speed distribution detection means for detecting flow speed distribution in a radial direction of said exhaust passage of exhaust gas flowing out of said PM trapper; and
determination means for determining a fault of said PM trapper based on said radial direction flow speed distribution detected by said flow speed distribution detection means.

9. A fault detection system for a PM trapper according to any one of claims 1 to 7, **characterized in that** said determination means performs detection of fault of said PM trapper when the temperature difference between the temperature of the exhaust gas flowing into said PM trapper and the temperature of said PM trapper is larger than a predetermined temperature difference.

10. A fault detection system for a PM trapper according to any one of claims 1 to 9, **characterized in that** said PM trapper is of a wall-flow type.
